# EUROPEAN PATENT APPLICATION

(11) **EP 2 075 803 A1**
(43) Date of publication of application: **01.07.2009**
(21) Application number: 07123970.1
(22) Date of filing: 21.12.2007
(51) Int. Cl.: H01B 17/32, B29C 33/20, B29C 33/34, B29C 33/36, B29C 45/14, H01B 19/00

(54) **Apparatus for controlled molding and demolding of composite insulators**

(71) Applicant: ABB Technology AG, 8050 Zürich (CH)
(72) Inventor: Strömbeck, Anders, 972 33 Luleå (SE); Windmar, Dan, 771 42 Ludvika (SE)
(74) Representative: Dahlstrand, Björn

(57) **Abstract**

The invention presents an apparatus for producing a composite insulator comprising a core rod and a sheath of a polymeric insulation material for high voltage applications. A mold with a first and a second mold section and the mold sections are arranged movable relative to each other and arranged to receive a core rod and to apply a sheath of an isolating material on the core rod. The apparatus comprises a holder arrangement for holding the core rod during opening and closing of the molds, and the holder arrangement is arranged to hold the core rod fixed in relation to the second mold section during a first opening phase and to hold the core rod fixed in relation to the first mold section during a second opening phase.

## Description

### TECHNICAL AREA

The invention relates to a molding fixture used when producing composite insulators for high voltage applications.

### TECHNICAL BACKGROUND

Compared with the conventional insulators manufactured homogeneously from the material ceramic or glass, composite insulators consist of two components of different materials.

There is known a composite electrical insulator which includes an elongate and solid or hollow core rod of fiber-reinforced plastics (FRP), a sheath covering the core rod over substantially the entire length thereof, and a plurality of sheds projecting radially outwards from the sheath and spaced from each other in a longitudinal direction of the core rod. The sheath and the sheds are integrally formed on the core rod by injection or transfer molding of appropriate polymeric material having an electrically insulating property, such as silicone rubber, ethylene propylene copolymer (EPM), ethylene propylene diene copolymer (EDPM), polyurethane, etc. The core rod has a longitudinal end portion provided with a seat which is integral with the sheath and to which a metal fitting can be fixedly secured. Such a composite insulator has been actually put into practical applications, particularly in any use environment which can draw out various functional advantages of the composite insulator.

In order to manufacture composite insulators, there is typically used a mold assembly which includes upper and lower mold halves defining a mold cavity when they are closed. The mold cavity has an inner surface which corresponds to the outer shape of the sheath, sheds and seats to be formed on the core rod. Thus, with the core rod placed in the mold cavity, the polymeric material is injected or introduced into the mold cavity and cured therein to form the sheath, the sheds and the seats which are integral with the core rod. The molds have to be tightly closed to prevent formation of burrs along the parting surface of the mold halves.

A problem with current production of large composite electrical insulator is in the loading and demolding operations. The state of the art for large parts to be integrated in mold processes is to manually load and/or use manually controlled lifting devices for both loading and demolding operations. The problems with these methods are that the precision is low, the operations are time consuming and is an issue for workers safety.

### SUMMARY OF THE INVENTION

The invention consists of a device that will control the movement and position of the tube part into and out of the mold in injection molding processes for composite insulators both for vertical and horizontal presses. The invention can also be used for similar press and injection processes for other products and materials.

The molds are connected to press tables of a press and movements and forces of the press tables provide movements and forces of the molds. A holder arrangement control the position of the core rod holders during closing of the dyes, molding and demolding. During opening of the molds (demolding), the insulator is first removed (disconnected from or demolded) from one mold during the first opening phase and then demolded from the other mold during the second opening phase. Before the second opening phase and demolding from the second mold, the arms disconnect from each other.

The invention solves the problems of manually loading and/or use manually controlled lifting devices for both loading and demolding operations. The invention controls the movement of the tube into the mold and during demolding after cure. The devices and principles of the invention are described by the figures.

The isolators that are produced in an apparatus described by the present invention can be 1 meter to 4 meters long or even longer. High voltage in this application means 72 kV or higher.

### BRIEF DESCRIPTION OF THE DRAWINGS

The drawings constitute a part of this specification and include exemplary embodiments to the invention, which may be embodied in various forms.
Fig 1. Shows schematically the positions of the molds/dyes and hollow core rod or mandrel before the injection molding processes starts.
Fig 2. Shows schematically the positions of the molds/dyes and hollow core rod or mandrel during the injection molding processes.
Fig 3. Shows schematically the positions of the molds/dyes and hollow core rod or mandrel after the injection molding processes has finished and the demolding process has started.
Fig 4. Shows schematically the positions of the molds/dyes and hollow core rod or mandrel after the injection molding processes has finished and the demolding process has finished.
Fig 5. A technical drawing showing the present invention and the arrangements of the parts during the injection molding processes.
Fig 6. A technical drawing showing the present invention and the arrangements of the parts after the injection molding processes and after demolding of the isolator.
Fig 7. A technical drawing showing a part of the apparatus (the core rod holder arrangement).

### DETAILED DESCRIPTION OF THE DRAWINGS

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

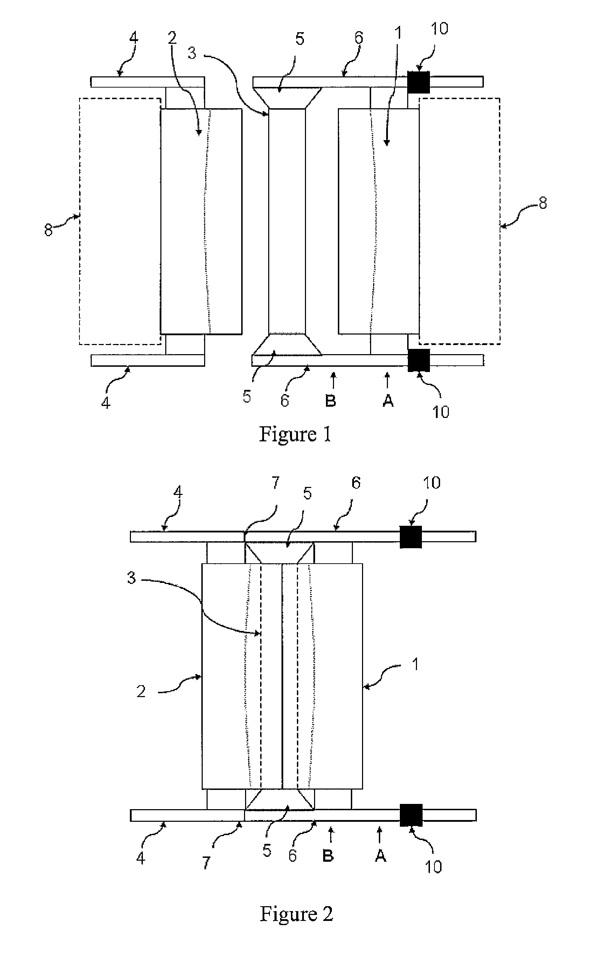

Figure 1. shows schematically the positions of the molds/dyes (1, 2) and hollow core rod or mandrel (3) before the injection molding processes starts. The core rod (3) is fixated on both ends by the core rod holder (5). The core rod (3) can be a hollow core rod for large insulators and the core rod (3) can be a solid body for e.g. hanging insulators. The core rod holder (5) have the function to hold and control the position of the core rod (3) during loading into the mold and during and after the demolding cycle. Two devices or first arms (6) are connected to each side of one of the core rod holder (5) and thus has a position related to the first mold half (1). The first mold half (1) can freely move with a linear movement independent of the core rod holder (5) and with a high precision between two fixed end positions (A and B). The movement of first arm is restricted by a linear guide between position A and B. In figure 1 the press tables (8) of a press are indicated by dashed boxes. The molds (1, 2) are connected to the press tables 8 and any movement of the molds (1, 2) are due to moment of the press tables (8) of the press. The first mold (1) is movable on the first arms (6) and a mechanical stopper (10) limits the movement of the first mold (1) on the first arms (6).

The core rod holder (5) are provided with a plate and center shaft on each side that fulfills several functions also for handling of the assembly in other operations besides the press. The core rod holder (5) has an integrated heating device and provides a shaft for handling and to fix the core rod (3) with precision. The shaft connects to first arm (6) in such a way that the core rod (3) is fixed in the axial direction.

Two other devices or second arms (4) can be connected or disconnected to first arms (6). When second arms (4) are disconnected from the first arms (6) the core rod holder (5) can freely move with a linear movement independent of the second mold half (2).

The first and second arms guides the core rod (3) to load the mold and for demolding and the force needed for movement of the molds, during molding and demolding, are provided by the press tables 8 of the press.

Figure 2. shows schematically the positions of the molds/dyes (1, 2) and hollow/solid core rod or mandrel (3) during the injection molding processes. The second arms (4) are connected and are fixed (7) to the first arms (6) and first mold half (1) have moved to the position B. The volume between the core rod and the dyes/molds is filled with isolating polymer which is cured. The force needed to hold the molds (1, 2) together during the molding processes is provided by the press tables (8).

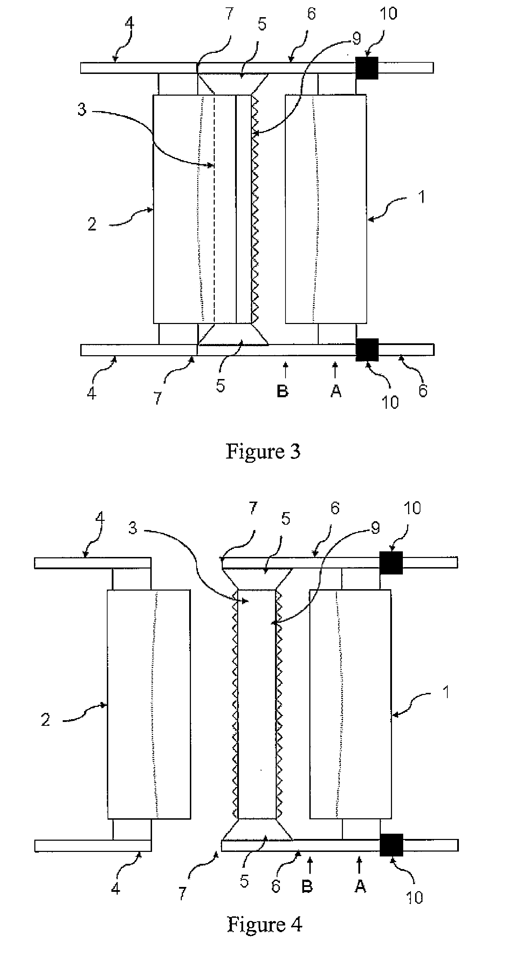

Figure 3. shows schematically the positions of the molds/dyes (1, 2) and hollow core rod or mandrel (3) after the injection molding processes has finished and at the end of the first opening phase. During the first opening phase the press tables moves apart but the holder arrangement prevents the core rod from demolding from the second mold. The first mold (1) is moved horizontally to demold the insulator from the first mold. The first mold (1) is moved to the position A on the first arms (6) until it reaches a mechanical stopper (10) and this ends the first phase of the opening or demolding process. The sheds and seats 9 formed on the core rod by the molding process are indicated in fig 3.

Figure 4. shows schematically the positions of the molds/dyes (1, 2) and hollow core rod or mandrel (3) after the second opening phase has finished and the demolding of the insulator from both molds is achieved. The second opening phase begins when the second arms (4) are disconnected from the first arms. During the second opening phase the second mold (2) moves horizontally away from the hollow core rod (3) with the molded sheath covering the core rod. The composite insulator can now be removed from the core rod holder (5) and a new hollow core rod can be placed between the press tables and the process can start again. The sheds and seats (9) formed on the core rod by the molding process are indicated in fig 4.

The process steps in the process of producing large composite insulators are;
1. The core rod (3) is fixed in position between the mold halves and connected to the core rod holder (5) which is connected to the first arms (6) on both sides.
2. When the core rod holder(5) moves (by moving the press tables of the press) for the closing operation, the tube assembly will be loaded into, first the mold half that relates to second arms (4) and secondly into mold half that relates to first arms (6). During this operation the position of the core rod is guided by the first arms (6) with arm one on each side of the mold half.
3. The core rod holder (5) that is connected to the tube assembly has an integrated heating device that will transfer heat to the flanges on the tube assembly and thus speed up the curing cycle.
4. After the curing cycle is finished and the mold starts to open by the press movement. During the first opening phase the core rod is fixed to and will stay in second mold half (2) until first mold half (1) moves along the first arms (6) and reaches the right end position (A) at the mechanical stopper (10). In the second opening phase the first arms (6) and second arms (4) disconnects (at 7) and further movement of the press will demold the tube assembly from second mold half (2).
5. After the demolding (and second opening phase) is finished the tube assembly (coated with the injected material) rests in a fixed position between the mold haves, which makes further automated handling easy.

Many different embodiments of the described invention may be envisioned. In one embodiment the core rod holder (5) could be fixed and the arms both disconnect from the core rod holder (5) and move independently to demold the insulator. In another embodiment the second mold half (2) is fixed. First, the first mold half (1) is moved along the first arms (6) to demold the insulator. Then, the second arms (4) disconnect from the core rod holder (5) and the first arms continue to move away and the insulator is demolded from the second mold half (2). The figures shows the mold halves moving in horizontal direction but another embodiment of the present invention is to turn the molds 90 degrees and have the mold halves move in vertical direction.

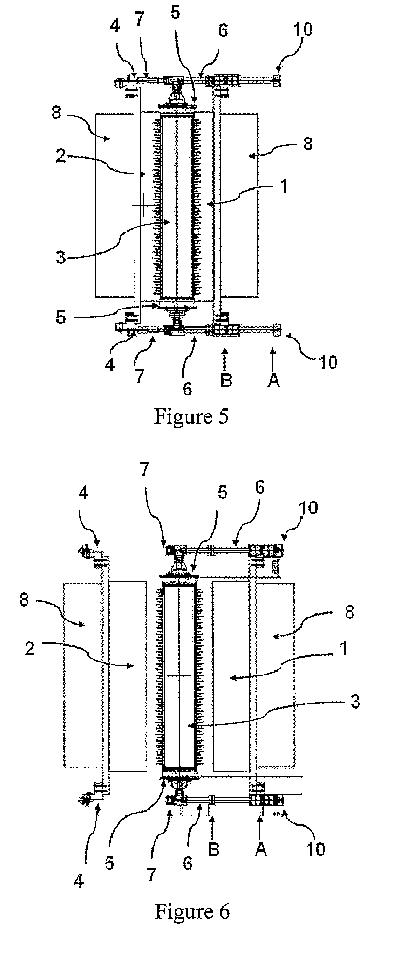

Figure 5 and 6 shows a technical drawing with the parts marked with the same number as in previous figures. Note that the second arms (4) in figure 6 are disconnected from the first arms (6) and turned 90 degrees so that they point into the drawing. In figure 5 the first arms (6) are held in position A by the linear guide and in figure 6 the first arms (6) are held in position B by the linear guide.

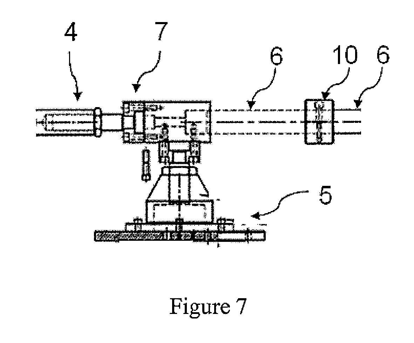

Figure 7 shows a technical drawing of the core rod holder (5) part of the apparatus. The second arm (4) is connected (7) to the first arm (6). The hollow core rod or mold insert is attached to the flange at the lower part of the core rod holder (5). On the other side of the apparatus there is a similar core rod holder (5) and these two holder arrangements together keep the hollow core rod in the correct position during the closing of the dyes (1, 2). The arrangement for disconnecting (7) first arms (6) and second arms (4) can be seen in figure 7.

## Claims

1. An apparatus for producing a composite insulator comprising a core rod and a sheath of a polymeric insulation material for high voltage applications, comprising a mold with a first and a second mold section (1, 2) and the mold sections are arranged movable relative to each other and arranged to receive a core rod (3) and to apply a sheath of an isolating material on the core rod (3),
**characterized in that**
the apparatus comprises a holder arrangement for holding and guiding the core rod (3) during closing and opening of the mold, and the holder arrangement is arranged to hold the core rod fixed in relation to the second mold section (2) during a first opening phase and to hold the core rod fixed in relation to the first mold section (1) during a second opening phase.

2. An apparatus according to claim 1 **characterized in that** said holder arrangement comprises first arms (6), and second arms (4) and core rod holder (5).

3. An apparatus according to claim 2 **characterized in that** said first arms (6) and second arms (4) are arranged to be connected during the first opening phase.

4. An apparatus according to claim 2 **characterized in that** said first arms (6) and second arms (4) are arranged to be disconnected during the second opening phase.

5. An apparatus according to any of the claims 2-4 **characterized in that** when the second arms (4) are connected to the first arms (6) the position of the core rod holder (5) is fixed in respect to the second mould section (2).

6. An apparatus according to any of the claims 1-5 **characterized in that** movement of the first arms (6) when closing and opening of the mold sections (1,2) are controlled by a linear guide.

7. An apparatus according to claim 6 **characterized in that** movement of the first arms (6) when closing and opening of the mold sections (1,2) are controlled by a linear guide and the movement of the first arms (6) are restricted by a mechanical stop (10) on first arms (6).

8. An apparatus according to any of the claims 1-7 **characterized in that** the mold sections (1, 2) are connected to press tables (8) of a press and movement of the mold sections (1, 2) arise from movement of said press tables (8) of the press.

9. An apparatus according to any of the claims 1-8 **characterized in that** said core rod holder (5) is arranged with integrated heating device to cure the polymeric insulation material molded on the core rod (3).

10. An apparatus according to any of the claims 1-9 **characterized in that** movement of mold sections (1, 2) relative to each other can be vertical or horizontal.
